# EUROPEAN PATENT SPECIFICATION

(11) **EP 3 333 340 B1**
(45) Date of publication and mention of the grant of the patent: **08.04.2020**
(21) Application number: 17206548.4
(22) Date of filing: 11.12.2017
(51) Int. Cl.: E04F 15/10, G08B 21/04, G08B 25/08, H01B 1/08, H01B 1/24, G08B 13/10, G08B 13/26

(54) **SURFACE-COVERING SENSOR MATERIAL AND SYSTEM COMPRISING SUCH MATERIAL**
OBERFLÄCHENBEDECKENDES SENSOR MATERIAL UND VERWENDUNG IN EINEM SYSTEM
MATERIAU DE RECOUVREMENT DE SURFACE COMPRENANT UN CAPTEUR ET SYSTEME L'UTILISANT

(30) Priority: 12.12.2016 GB 201621094; 09.08.2017 GB 201712772
(43) Date of publication of application: 13.06.2018
(73) Proprietor: University of Hertfordshire Higher Education Corporation, Hatfield Hertfordshire AL10 9AB (GB)
(72) Inventor: Peace, Richard John, Letchworth, Hertfordshire SG6 1NW (GB); Patsavellas, Ioannis, Letchworth, Hertfordshire SG6 1NW (GB); Puscasu, Onoriu, Letchworth, Hertfordshire SG6 1NW (GB); Herfatmanesh, Mohammad Reza, Hatfield, Hertfordshire AL10 9AB (GB); Day, Rodney, Hatfield, Hertfordshire AL10 9AB (GB); Jalali, Nimra, Letchworth, Hertfordshire SG6 1NW (GB)
(74) Representative: CSY Herts

(56) References cited:
- EP-A2- 1 732 048
- WO-A1-00/75417
- WO-A1-2016/091879
- DE-A1-102007 031 964
- ES-A2- 2 436 652
- US-A1- 2015 276 963

## Description

The present invention provides a synthetic surface covering having a sensor layer.

With the growth of the internet of things which allows online connections to be made between many more objects than phones and computers for the gathering of data, new ways have been sought to collect information about the use of public spaces such as buildings and mass transport to allow automation of routine tasks, to ensure that resources are not wasted and for the safety of the users.

For example, with an ageing population and increasing labour costs, sensors are needed for nursing homes to help monitor residents' rooms. In public spaces, sensors could be used to detect hazards or such that lighting is only switched on when a public space is in use. In a mass transport system, a sensor could be used to monitor performance of the system to help with the scheduling of maintenance tasks.

Known sensors are not suitable for mass manufacture or for incorporation into standard surface coverings such as flooring and/or wall materials which makes such materials expensive.

EP1732048 (MALOT STEPHANE) describes a playground which has a flooring comprising an interior porous layer made up of synthetic butadiene rubber (SBR) and another exterior porous layer made up of ethylene-propylene terpolymer (EPDM). Three presence sensors are disposed between a concrete covering and the flooring. The sensors are connected by cables with a processing system for controlling the display of a light signal and/or the diffusion of a warning message by warning units.

WO2016091879 (TARKETT GDL) describes a multilayer floor covering comprising a resilient top covering for providing a walking surface, a sheet-type sensor layer arranged underneath the resilient top covering, a first adhesive layer attaching the resilient top covering to the sheet-type sensor layer and a second adhesive layer for attaching the sheet-type sensor layer to an underlying subfloor. To facilitate access to the sheet-type sensor layer, the first adhesive layer is configured to provide lower resistance to peeling than the second adhesive layer. The invention further proposes a kit of parts for achieving such a floor covering as well as a method for installing the floor covering.

A way of ameliorating these problems has been sought.

According to the invention there is provided a sensor surface-covering material comprising a layer of synthetic material and a sensor layer wherein the sensor layer is configured to detect a change in an electrical property wherein the sensor layer comprises at least one conductive layer and wherein the electrical property is resistance and/or capacitance wherein the sensor layer comprises a combined detectable electrical-property and mechanical-property sensor layer and wherein the sensor layer comprises three layers: a top layer comprising a detectable mechanical-property sensor layer; a middle layer comprising an insulating layer; and a bottom layer comprising a detectable electrical-property sensor layer.

According to the invention there is also provided a sensor surface-covering system comprising a sensor surface-covering material according to the invention and an electrical component housing including a signal processor for analysing a signal from the sensor surface-covering material.

The advantages of the invention include that by providing a sensor layer in a synthetic surface-covering or flooring, it is possible to sense a change in an electrical property at a pre-defined location directly without the person(s) at the location feeling like they are being observed and without needing to wire in cameras or other sensors.

In some embodiments, the sensor surface-covering material may be a sensor flooring material, a sensor walling material, or a sensor underlay. In some embodiments, the sensor layer senses a change in a detectable electrical or mechanical property.

In some embodiments, the detectable electrical property may be resistivity, resistance, capacitance (for example dielectric strength or permittivity) and/or projected capacitance. By sensing a change in resistivity, the presence of moisture under the sensor surface-covering material may be detected. By sensing a change in capacitance or in projected capacitance, the presence of water or a water-containing body on, above or below the sensor surface-covering material may be detected such that hazards on or under a flooring material such as water or fruit (e.g. grapes or banana skin) can be identified remotely. Through using signal processing and optionally through sensing a change in applied mechanical stress, the presence of such a hazard may be distinguished from another body with high water content such as a human or animal. By sensing a change in projected capacitance, the sensor surface-covering material may be used to detect gestures such that the sensor surface-covering material may be used to control a function of an electrical device.

In some embodiments, at least one layer of the sensor layer comprises a printable material. Advantages of having at least one layer of the sensor layer formed from a printable material, include that the flooring material is suitable for production on an industrial scale. Herein, it should be understood that a printable material is a material suitable for application in an industrial process. Examples of suitable printable conductive materials include a film having a conductive pattern (for application by lamination), a conductive wire, metallic mesh, metallic foil (for application by hot stamp foiling or by heat press transfer), self-adhesive film, conductive ink (for application by chemical/mechanical transfer or by incorporation into a support or scrim layer). Examples of suitable industrial processes include lamination, hot stamp foiling, heat press transfer, chemical/mechanical transfer, embedding, chemical bonding and/or growth of conductive nanomaterials (such as silver, copper, carbon, graphene, PEDOT:PSS, indium tin oxide, aluminium zinc oxide, a carbon nanotube, and/or a conductive nanowire).

In some embodiments, the sensor layer may detect a change in a detectable mechanical property such as mechanical stress (such as vibration and/or deformation); in some embodiments, the detectable mechanical property may be sensed by a change in piezoelectricity or a measurement thereof. By sensing a change in a detectable mechanical property such as applied mechanical stress, the presence of a human or animal body may be detected at a location.

In some embodiments, the sensor layer may comprise one or more layers of a sensor material. In some embodiments, the sensor layer may be a printable layer. In some embodiments, the at least one conductive layer is for communicating sensor information from the sensor layer. In some embodiments, the at least one conductive layer is for providing electrical energy to the sensor layer.

In some embodiments, the sensor layer may detect a change in a mechanical property such as applied mechanical stress for example application of pressure to the sensor flooring material, vibration of the sensor layer and/or its degree of deformation. In some embodiments, the sensor flooring material is suitable for use in detecting footfall in a public space such as a mass transit station or in a commercial space such as a shopping mall or supermarket. In some embodiments, the sensor flooring material is suitable for use in a hospital or nursing home in a patient's room for monitoring movement by a patient.

In some embodiments, the sensor flooring material comprises a plurality of different regions comprising at least a sensor region where the flooring material comprises a sensor layer and a non-sensing region where the sensor layer has been replaced by a spacer layer wherein the spacer layer is formed from a synthetic material. In some embodiments, the spacer layer may have substantially the same thickness as the sensor layer. In some embodiments, the flooring material may comprise a signalling region where the sensor layer has been replaced by a signalling layer which comprises at least one conductive layer. The advantages of a flooring material having a plurality of different regions include that the flooring material may be constructed such that the at least one sensor region is arranged in an area where sensing is required, the at least one signalling region may be arranged to connect the sensor region to a signal processing device or detection system and the non-sensing regions may be arranged in areas where sensing is not needed to minimise the cost of the flooring material.

In some embodiments, the sensor flooring material may comprise a deflection aid to increase movement of the sensor material. Advantages of including a deflection aid in the sensor flooring material according to the invention include that the sensitivity of the sensor flooring material to movement or deformation is increased. In some embodiments, the deflection aid may be provided on the synthetic material to impinge upon the sensor layer. In some embodiments, the deflection aid may comprise one or more profiles or studs on a lower layer of the synthetic material.

In some embodiments, the sensor layer may comprise one or more detectable electrical-property sensors and/or one or more mechanical detectable property sensors. In some embodiments, the sensor layer may comprise a layer of one or more detectable electrical-property sensors and/or a layer of one or more mechanical detectable property sensors. In some embodiments, the sensor layer comprises a first sensor layer comprising one or more detectable electrical-property sensors and a second sensor layer comprising one or more mechanical detectable property sensors wherein the first and second sensor layers are separated by an insulating layer.

In some embodiments, the mechanical detectable property sensor layer may detect a change in applied mechanical stress. In some embodiments, the mechanical detectable property sensor layer comprises one or more mechanical detectable property sensors wherein each mechanical detectable property sensor comprises a pair of conductive layers in the form of electrodes and a sensor material arranged between the electrodes wherein the sensor material comprises an electroactive polymer, a force sensing resistor, an electret and/or a piezoelectric material. In some embodiments, the sensor layer comprises conductive connectors to connect the one or more detectable electrical-property sensors and/or one or more mechanical detectable property sensors to a power supply. In some embodiments, the sensor material may be an electrode-free sensor material which has an electrical property which changes when the electrode-free sensor material is subject to mechanical stress for example by being deformed or moved and which is detectable without the need for electrodes, for example a carbon nanotube/polymer blend, and/or a piezoresistive material. In such an embodiment, a mechanical detectable property sensor comprises an electrode-free sensor material which is connected directly to a power source.

In some embodiments, the electrical property sensor layer comprises one or more detectable electrical-property sensors. In some embodiments, a detectable electrical-property sensor comprises one or more capacitor sensors and/or one or more conductive element sensors. In some embodiments, the electrical detectable property sensor layer may form an external surface of the sensor surface-covering material particularly where the sensor layer comprises a conductive element sensor such that the conductive element sensor can detect the presence of a conductive object.

In some embodiments, the sensor layer comprises a sensor array comprising a plurality of sensors wherein each sensor comprises at least one conductive layer and at least one layer of sensor material.

Examples of electroactive polymers include a dielectric electroactive polymer such as a dielectric elastomer, a ferroelectric polymer such as PVDF, an electrostrictive graft polymer and/or a liquid crystalline polymer such as a natural or synthetic piezoelectric material. Examples of electrets include a ferroelectret, a real-charge electret and/or an oriented-dipole electret; for example an electret formed from a synthetic polymer such as a fluoropolymer, polypropylene and/or polyethyleneterephthalate. Examples of ferroelectrets include one or more layers of a cellular polymer or polymer foam formed from a polymer such as polycarbonate, perfluorinated or partially fluorinated polymers such as PTFE, fluoroethylenepropylene (FEP), perfluoroalkoxyethylenes (PFA), polypropylene, polyesters, polyethylene terephthalate (PET), polyethylene naphthalate (PEN), cyclo-olefin polymers, cyclo-olefin copolymers, polyimides, polymethyl methacrylate (PMMA) and/or polymer blends.

Examples of suitable piezoelectric materials include a natural material (for example silk) or a synthetic material (such as a polymeric and/or ceramic material). A suitable piezoelectric polymer includes a semi-crystalline polymer or an amorphous dipolar polymer. Suitable semi-crystalline piezoelectric polymers include polyvinylidene fluoride (PVDF), a PVDF copolymer (such as polyvinylidene fluoride tetrafluoroethylene (PVDF-TrFE)) or terpolymer (such as polyvinylidene fluoride tetrafluoroethylene chlorotrifluoroethylene (PVDF-TrFE-CTFE)), polyamides, liquid crystal polymers and/or poly(p-xylylene) (such as Parylene-C). Suitable amorphous dipolar piezoelectric polymers include polyimide and/or polyvinylidene chloride.

A suitable ceramic piezoelectric material includes a particle of lead titanate such as lead zirconate titanate (PZT) or PMT-PT, lead potassium niobate, sodium potassium niobate (NKN), bismuth ferrite, sodium niobate, bismuth titanate, sodium bismuth titanate, barium titanate, potassium niobate, lithium niobate, lithium tantalite, sodium tungstate, zinc oxide and/or barium sodium niobate. In some embodiments, the ceramic material may be in the form of a particle. In some embodiments, the piezoelectric layer may comprise one or more polymer layers wherein one or more of the polymer layers comprise a particle of piezoelectric ceramic material.

In some embodiments, a piezoresistive material may be a platinum alloy, nickel and/or a semiconductor such as germanium, polycrystalline silicon, amorphous silicon, and/or single crystal silicon.

A suitable force sensing resistor may be a polymer comprising conducting and optionally non-conducting particles. The polymer for use in a force sensing resistor may be printable.

In some embodiments, the printable layer may be a layer which is formed from a material which may be applied by printing, drawing, depositing or adhering. In some embodiments, the printable material may be a material suitable for being deposited such as a metal, metal film, metal derivative, polymer, crystalline material and/or amorphous material, for example:
- a metal which may be deposited by plating (e.g. gold, silver, tin, zinc, copper, chromium, nickel or platinum), a metal or metal derivative which may be deposited by chemical solution deposition (e.g. a conducting metal oxide such as indium tin oxide),
- a polymer (such as a conductive or sensing polymer) film which may be deposited by spin coating,
- a crystalline (such as monocrystalline or polycrystalline) or amorphous material which may be deposited by chemical vapour deposition such as polysilicon, silicon dioxide, silicon nitride, a metal (such as tungsten, aluminium, copper, molybdenum, tantalum, titanium and/or nickel), graphene or diamond,
- a metal film which may be deposited by atomic layer deposition such as copper, tungsten, a transition-metal nitride, gold, silver or platinum,
- a metal film which may be deposited by physical deposition (such as physical vapour deposition, molecular beam epitaxy, sputtering, pulsed laser deposition, cathodic arc deposition or electrohydrodynamic deposition).

In some embodiments, the printable material may be a material which is suitable for being applied by a pen or other suitable dispenser such as a printer (e.g. by screen, digital, gravure or flexo printing or by an ink jet printer) such as a conductive ink layer. In some embodiments, the printable layer may be a material which is suitable for being applied by adhering such as a metal strip, for example a copper or aluminium strip.

In some embodiments, the sensor layer may comprise a plurality of individual sensors arranged in a matrix. In some embodiments, the sensor layer may comprise one or more conductive layers comprising one or more conductive materials. In some embodiments, a conductive layer may comprise a layer of a metal or of a conductive polymeric material or adhesive; for example, a layer of aluminium, copper, or conductive phenolic resin. In some embodiments, the conductive material may comprise a conductive ink. In some embodiments, the layer of conductive material may be a printed layer, for example a screen-printed layer or a digital inkjet-printed layer.

In some embodiments, the mechanical property sensor layer may comprise an electrode layer; for example, the sensor layer may comprise two electrode layers. In some embodiments, the sensor layer may comprise a printable electrode layer. In some embodiments, the sensor layer may comprise a protective layer. The protective layer may be an insulating protective layer.

In some embodiments, the sensor flooring material comprises a protective coating layer. The protective coating layer may be a chemically protective coating layer or an upper layer of a conventional flooring such as a layer of matting, natural or synthetic carpet, ceramic, wood, cork, rubber or stone. Where the protective coating layer is a chemically protective coating layer, the protective coating layer may be thermally curable (e.g. water-based polyurethane or PVDF), a thermally and/or UV curable (e.g. water-based UV curable polyurethane) layer or a UV curable (e.g. a polyacrylate or urethane acrylate) layer.

In some embodiments, the sensor flooring material may be a non-slip flooring material. In some embodiments, the flooring material may comprise a non-slip protective coating layer. A non-slip protective coating layer may comprise one or more non-slip particles. In some embodiments, the particles may be smooth particles. A smooth particle is a particle which has no angular protrusion or indentation, for example a particle which has no protrusion or indentation having an outward facing angle of about 90° or less. In some embodiments, the particles may be one or more of a smooth sphere, bead and grain. The advantage of using a smooth particle in the sensor flooring material according to the invention is that the cured coating is easier to clean as the coating lacks any angular surface in which a cleaning material (for example the fibres of a mop) may be caught.

In some embodiments, a non-slip particle used in the sensor flooring material according to the invention may be one or more of the following types of particle: a glass particle, a silica particle, a polymeric particle (for example Nylon (Trademark)), a ceramic particle (e.g. porcelain) and an aluminium oxide particle. In some embodiments from 15 to 70 weight % of non-slip particle may be used relative to the weight of the materials used to form the layer in which the non-slip particle is included.

In some embodiments, the protective coating layer may include one or more layers. Where the non-slip protective coating layer has two or more layers such that the non-slip protective coating layer has an upper coating layer which provides the non-slip surface and one or more lower coating layers, at least the upper coating layer contains non-slip particles.

In some embodiments, the sensor flooring material according to the invention comprises one or more undercoat layers comprising a plastics material, for example a polymeric material. Examples of suitable plastics material include plasticised PVC, rubber, rubber and a polyolefin, linoleum, plasticised acrylic, and/or a polyolefin. Optionally, the one or more undercoat layers may contain one or more types of slip resistant and/or wear resistant particles such as aluminium oxide, silicon carbide, quartz or glass. Optionally, the one or more undercoat layers may include one or more types of decorative elements such as a coloured chip, fleck and/or flake for example of a coloured polymeric material and/or a printed decorative layer. The flooring material may optionally be embossed. In some embodiments, the one or more undercoat layers may comprise a foamed polymeric material which is capable of imparting a sound attenuation effect, for example an acoustic impact sound reduction of 12, 13, 14 or 15dB.

In some embodiments, a sensor flooring material comprising rubber and a polyolefin may comprise a thermoplastic polymer and an elastomer material. In some embodiments, a thermoplastic polymer may be a polyethylene (for example ultra-high molecular weight polyethylene or an ethylene alkane copolymer), an acid copolymer, an ionomer, polystyrene, acrylate (for example ethylene butyl acrylate or ethylene methyl acrylate), acetate (for example ethylene vinyl acetate), PVC, polypropylene and/or polybutylene. In some embodiments, an elastomer may be styrene butadiene rubber, nitrile butadiene rubber, natural rubber, isoprene rubber and/or ethylene propylene rubber. In some embodiments, the sensor flooring material comprising rubber and a polyolefin may additionally comprise a production additive such as a friction reducer for example a silicone. In some embodiments, the flooring material comprising rubber and a polyolefin may additionally comprise a top protective layer of a polyurethane, acrylate, epoxy or a mixture thereof.

In some embodiments, the sensor flooring material comprises a decorative layer. A decorative layer may be a layer of ink or a printed film layer.

In some embodiments, the sensor flooring material may be in the form of a sensor flooring underlay for positioning underneath a conventional flooring material or floor covering. In some embodiments, the sensor flooring underlay may comprise a deformable layer. In some embodiments, the deformable layer may include a resilient lattice-shaped support structure.

In some embodiments, the housing comprises a signal processor; for example, the housing may comprise a detection system, for example to automate buildings by opening doors, turning on lights and/or heating or cooling. In some embodiments, the system according to the invention comprises an alarm such that the system may be used to detect presence of a human, animal or object for example an intruder or the fall of a patient from their bed. In some embodiments, the system may include a data storage device for storage of flooring sensor data and a data analysis device for analysis of the stored flooring sensor data so as to permit analysis of the usage of the area in which the sensor flooring is placed, for example to analyse walking patterns to recognise people or to diagnose health conditions of the users of the area; to collect footfall data; and/or to prepare heat maps.

In some embodiments, the signal processor may be programmable to differentiate different types of sensor layer signal data so as to determine the proximity or location of an object and the type of object such as its size, weight, whether it is moving or stationary. In some embodiments, the sensor layer may comprise a detectable electrical-property sensor and the signal processor may be programmed to determine the proximity or location of a conductive object. In some embodiments, the sensor layer may comprise a mechanical detectable property sensor and the signal processor may be programmed to determine the type of an object interacting with the sensor surface-covering material or sensor surface-covering system.

The sensor surface-covering system is generally suitable for use in a building, particularly a building having high footfall such as a municipal building such as a hospital, a library, a court house, a theatre, a shopping centre or mall. The sensor surface-covering system is also generally suitable for use in a vehicle, particularly a transit vehicle such as a bus, train, aeroplane or ship (for example a ferry). In some embodiments, the sensor surface-covering system may comprise a sensor flooring material suitable for placement in a zone of high footfall where the sensor layer comprises a piezoelectric material, optionally one or more conducting areas where the sensor layer comprises a conductive material for connecting the sensor area to the electrical components for detecting and optionally analysing data from the sensor surface-covering material.

According to the invention there is provided a sensor surface-covering material comprising a layer of synthetic material and a sensor layer which detects a change in an electrical or mechanical property, wherein the sensor layer comprises at least one conductive layer and wherein at least one layer of the sensor layer comprises a printable material.

According to the invention there is further provided a sensor flooring material comprising a layer of synthetic material and a sensor layer wherein the sensor layer comprises at least one conductive layer and at least one layer of sensor material having a detectable property which property changes when the sensor material is deformed or moved wherein at least one layer of the sensor layer comprises a printable material.

According to the invention there is also provided a sensor surface-covering system comprising a sensor surface-covering material according to the invention and an electrical component housing including a signal processor for analysing a signal from the sensor surface-covering material.

The invention will now be described with reference to the following Figures of the accompanying drawings which are not intended to limit the scope of the invention in which:
**Figure 1** shows a schematic cross-section of a first embodiment of a sensor flooring material according to the invention;
**Figure 2** shows a schematic cross-section of a second embodiment of a sensor flooring material according to the invention;
**Figure 3** shows a schematic cross-section of a third embodiment of a sensor flooring material according to the invention;
**Figure 4** shows a schematic cross-section of a fourth embodiment of a sensor flooring material according to the invention;
**Figure 5** shows a schematic cross-section of a fifth embodiment of a sensor flooring material according to the invention which is in the form of a sensor underlay according to the invention and a decorative floor covering having a profiled base layer;
**Figure 6** shows a schematic underneath plan view of the sensor underlay of the fifth embodiment of a sensor flooring material according to the invention;
**Figures 7A, 7B****,** **7C and 7D** respectively show schematic cross-sections of first, second, third and fourth embodiments of a sensor layer for use in a sensor flooring material according to the invention;
**Figures 8A and 8B** respectively show schematic plan views of first and second embodiments of a signalling array for use in a sensor flooring material according to the invention;
**Figure 9** shows a schematic cross-section of a signalling layer for use in a sensor flooring material according to the invention;
**Figure 10** shows a schematic cross-section of a spacer layer for use in a sensor flooring material according to the invention;
**Figure 11** shows an overhead plan view of a first embodiment of a sensor flooring system according to the invention;
**Figure 12** shows a schematic plan view of a fifth embodiment of a sensor layer for use in the invention;
**Figure 13** shows a schematic plan view of a sixth embodiment of a sensor layer for use in the invention;
**Figure 14** shows a schematic cross-sectional view of a seventh embodiment of a sensor layer for use in the invention;
**Figure 15** shows a schematic cross-sectional view of an eighth embodiment of a sensor layer for use in the invention; and
**Figure 16** shows a schematic cross-sectional view of a seventh embodiment of a sensor surface-covering material according to the invention.

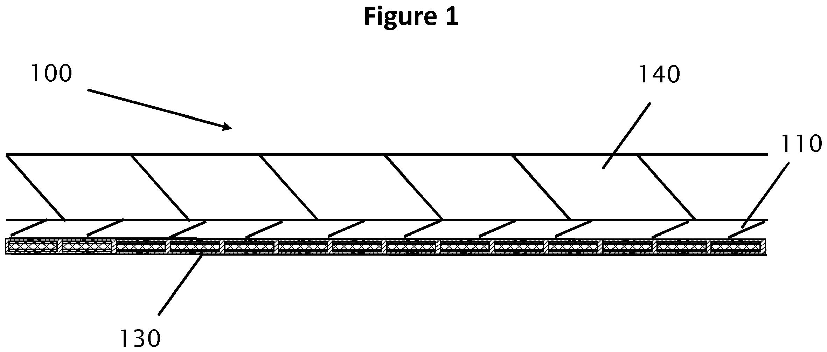

The first embodiment of a sensor surface-covering material in the form of a sensor flooring material indicated generally at 100 is illustrated in Figure 1. Sensor flooring material 100 has three layers laminated or adhered together. A first layer is a sensor layer 130 comprising one or more printed layers of a piezoelectric material. The sensor layer 130 is laminated on the lower side of a substrate base layer 110 which is a cellulose/polyester support reinforced with a 32 tex glass crennette. On top of the substrate layer 110 there is an overcoat layer 140 which is formed from a plastics material. Sensor layer 130 is a detectable mechanical-property sensor layer as it is capable of detecting a change in a mechanical property.

As an alternative to the embodiment depicted in Figure 1, the sensor flooring material 100 may omit a substrate layer 110. In a further alternative embodiment, the sensor flooring material may have an undercoat layer arranged between the substrate layer 110 and the overcoat layer 140. In an alternative embodiment, the undercoat layer may be a foamed layer which is capable of imparting a sound attenuation effect, for example an acoustic impact sound reduction of 12, 13, 14 or 15dB. In a further alternate embodiment, sensor layer 130 may be replaced by the second, third, fourth, fifth, sixth, seventh or eighth embodiment of the sensor layer 230,330,430,530,630,730,830.

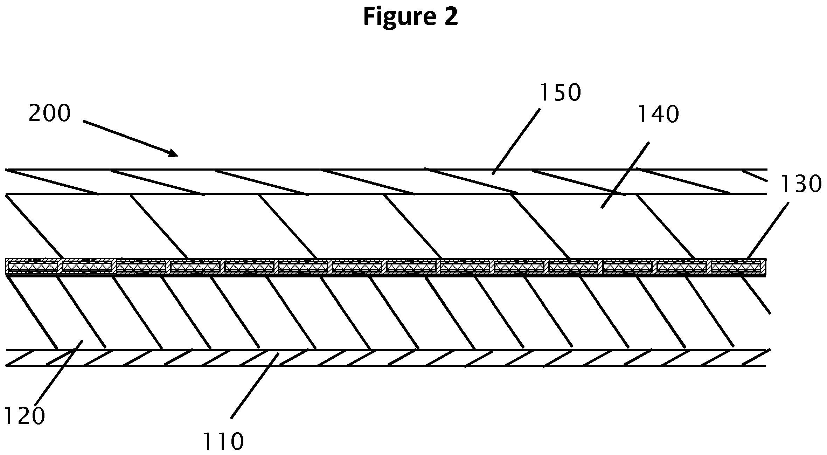

The second embodiment of a sensor surface-covering material in the form of a sensor flooring material indicated generally at 200 is illustrated in Figure 2. Sensor flooring material 200 has five layers laminated or adhered together. A first layer is a substrate base layer 110 which is a cellulose/polyester support reinforced with a 32 tex glass crennette. On top of the substrate layer 110 there is an undercoat layer 120 which is formed from a plastics material. On top of the undercoat layer 120, there is a sensor layer 130 comprising one or more printed layers of a piezoelectric material. On top of the sensor layer 130, there is an overcoat layer 140 which is formed from a plastics material. On top of overcoat layer 140, there is a protective coating layer 150 formed from a plastics material.

As an alternative to the embodiment depicted in Figure 2, the sensor flooring material 200 may omit a substrate layer 110 or an undercoat layer 120. In a further alternative embodiment, the protective coating layer 150 may be a matting layer, a natural or synthetic carpet layer, a ceramic layer, a wood layer, a cork layer, a rubber layer or a stone layer. In a further alternate embodiment, sensor layer 130 may be replaced by the second, third, fourth, fifth, sixth, seventh or eighth embodiment of the sensor layer 230,330,430,530,630,730,830. In an alternative embodiment, the undercoat layer 120 may be a foamed layer which is capable of imparting a sound attenuation effect, for example an acoustic impact sound reduction of 12, 13, 14 or 15dB.

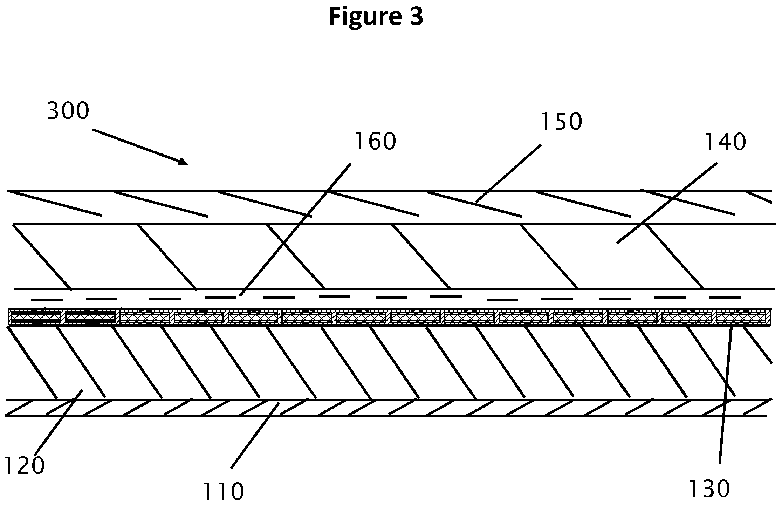

The third embodiment of a sensor surface-covering material in the form of a sensor flooring material indicated generally at 300 is illustrated in Figure 3. Sensor flooring material 300 has six layers laminated or adhered together. A first layer is a substrate base layer 110 which is a cellulose/polyester support reinforced with a 32 tex glass crennette. On top of the substrate layer 110 there is an undercoat layer 120 which is formed from a plastics material. On top of the undercoat layer 120, there is a sensor layer 130 comprising one or more printed layers of a piezoelectric material. On top of the sensor layer 130, there is a decorative layer 160 which comprises a layer of ink applied by printing or a printed film. On top of decorative layer 160, there is an overcoat layer 140 which is formed from a plastics material. On top of decorative layer 160, there is a protective coating layer 150 formed from a plastics material.

As an alternative to the embodiment depicted in Figure 3, the sensor flooring material 300 may omit a substrate layer 110. In a further alternative embodiment, the protective coating layer 150 may be a matting layer, a natural or synthetic carpet layer, a ceramic layer, a wood layer, a cork layer, a rubber layer or a stone layer. In a further alternate embodiment, sensor layer 130 may be replaced by the second, third, fourth, fifth, sixth, seventh or eighth embodiment of the sensor layer 230,330,430,530,630,730,830. In an alternative embodiment, the undercoat layer 120 may be a foamed layer which is capable of imparting a sound attenuation effect, for example an acoustic impact sound reduction of 12, 13, 14 or 15dB.

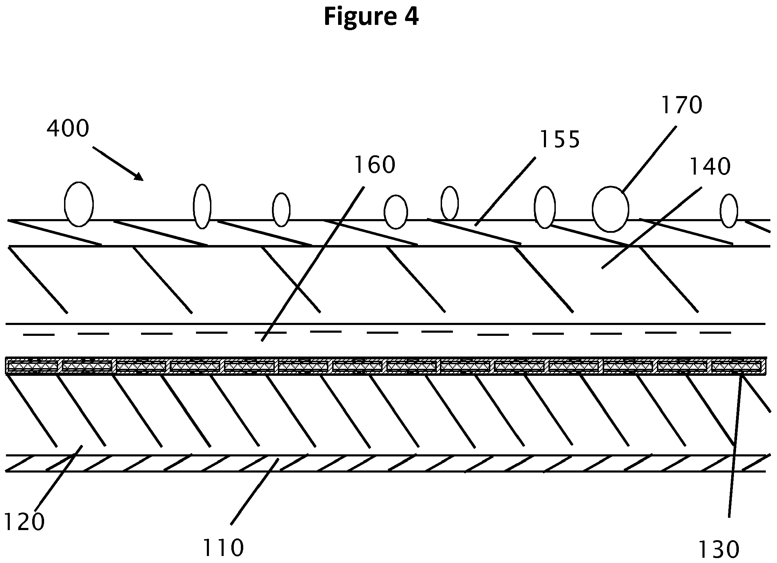

The fourth embodiment of a sensor surface-covering material in the form of a sensor flooring material indicated generally at 400 is illustrated in Figure 4. Sensor flooring material 400 has six layers laminated or adhered together. A first layer is a substrate base layer 110 which is a cellulose/polyester support reinforced with a 32 tex glass crennette. On top of the substrate layer 110 there is an undercoat layer 120 which is formed from a plastics material. On top of the undercoat layer 120, there is a sensor layer 130 comprising one or more printed layers of a piezoelectric material. On top of the sensor layer 130, there is a decorative layer 160 which comprises a layer of ink applied by printing or a printed film. On top of decorative layer 160, there is an overcoat layer 140 which is formed from a plastics material. On top of overcoat layer 140, there is a non-slip protective coating layer 155 formed from a plastics material and comprising one or more abrasive particles 170 which are proud of the non-slip protective coating layer to provide a non-slip effect.

As an alternative to the embodiment depicted in Figure 4, the sensor flooring material 400 may omit a substrate layer 110. In a further alternative embodiment, the protective coating layer 155 may be a matting layer, a natural or synthetic carpet layer, a ceramic layer, a wood layer, a cork layer, a rubber layer or a stone layer. In a further alternate embodiment, sensor layer 130 may be replaced by the second, third, fourth, fifth, sixth, seventh or eighth embodiment of the sensor layer 230,330,430,530,630,730,830. In an alternative embodiment, the undercoat layer 120 may be a foamed layer which is capable of imparting a sound attenuation effect, for example an acoustic impact sound reduction of 12, 13, 14 or 15dB.

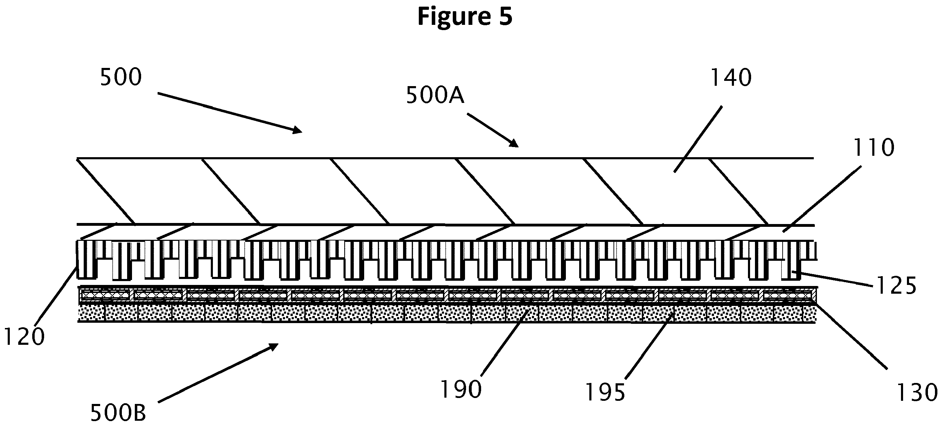

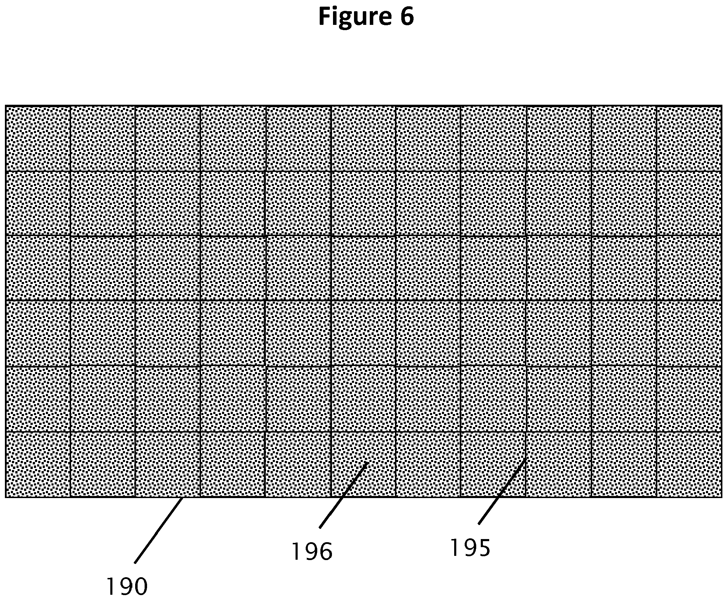

A fifth embodiment of a sensor surface-covering material in the form of a sensor flooring material indicated generally at 500 is illustrated in Figures 5 and 6. Sensor flooring material 500 comprises a conventional flooring material indicated generally at 500A placed on top of a sensor surface-covering material in the form of a sensor underlay indicated generally at 500B. Sensor underlay 500B has two layers laminated or adhered together and is an underlay for placing underneath a conventional flooring material. A first layer is a deformable layer 190 having a resilient lattice-shaped support structure 195 shown in Figure 6. The resilient lattice-shaped support 195 provides the flooring material 500 with a degree of structure. Lattice-shaped support 195 forms spaces 196. As the deformable layer 190 is suitable for use in sound attenuation, it needs the support 195 to reduce rolling resistance. It has been found that such a deformable acoustic layer 190 is so deformable that it has a rolling resistance which makes it difficult to roll trolleys or other wheeled objects on it. On top of the deformable layer 190, there is a sensor layer 130 comprising one or more sheets of a piezoelectric material. The sensor layer 130 may be laminated, printed or adhered to the deformable layer. In an alternative embodiment, flooring material 500A has a protective layer on top of the sensor layer 130. The deformable layer may be formed from rubber crumb, rubber and polyolefin and/or a plastics material with a blowing agent such as blown PVC. The honeycomb support may be formed from a resilient plastics or metal such as polycarbonate or aluminium.

In an alternate embodiment, sensor layer 130 may be replaced by a sensor layer according to the second, third, fourth, fifth, sixth, seventh or eighth embodiments 230,330,430,530,630,730,830. In an alternate embodiment, the sensor underlay 500B may comprise one or more signalling regions where sensor layer 130 is replaced by a signalling layer 180. In an alternate embodiment, the sensor underlay 500B may comprise one or more non-sensing regions where sensor layer 130 is replaced by a spacer layer 185.

Where sensor layer 130 is replaced by a resistive sensor layer 530,630,730 according to the fifth, sixth or seventh embodiment of the invention, the resistive sensor layer 530,630,730 may form a bottom layer of the sensor underlay 500B such that the resistive sensor layer 530,630,730 contacts the surface to which sensor flooring material 500 is applied such that the resistive sensor layer 530,630,730 can be used to detect the presence of moisture on that surface.

A floor covering suitable for use with the sensor underlay 500B according to the invention indicated generally at 500A is illustrated in Figure 5. Floor covering 500A has a decorative upper layer 140, an intermediate scrim layer 110 and a lower layer 120 having a lower surface which is provided with studs or profiles 125 which act as deflection aids. In use, the floor covering 500A is placed on the sensor underlay 500B such that the studs or profiles 125 ensure maximum deflection of the sensor layer 130 when a person walks on floor covering 500A. The floor covering 500A is arranged on sensor underlay 500B such that studs or profiles 125 are aligned with spaces 196 in lattice-shaped support 195. Floor covering 500A may be a floor covering as disclosed in WO 03/106783, the contents of which document is incorporated herein by reference. In an alternative embodiment, floor covering 500A may have a lower layer 120 which has a smooth lower surface such that lower layer 120 lacks the studs or profiles 125.

In an alternative embodiment, the sensor flooring material 100,200,300,400,500 may include a mechanical detectable property layer 130,230,330,430 according to the first, second, third or fourth embodiments, a resistive and/or capacitive sensor layer 530,630,730 according to the fifth, sixth or seventh embodiments of the invention and/or a capacitive sensor layer 830 according to the eighth embodiment of the invention such that it may be used as a sensor walling material for application to a wall surface. By including a mechanical detectable property layer 130,230,330,430, the sensor walling material may be used for example for pressure-sensitized audio playback. By including a resistive and/or capacitive sensor layer 530,630,730, the sensor walling material may be used to detect the presence of water at the location where the sensor walling material is used. By including a capacitive sensor layer 830, the sensor walling material may be used to form a switch which may be operated by making a gesture near the sensor walling material

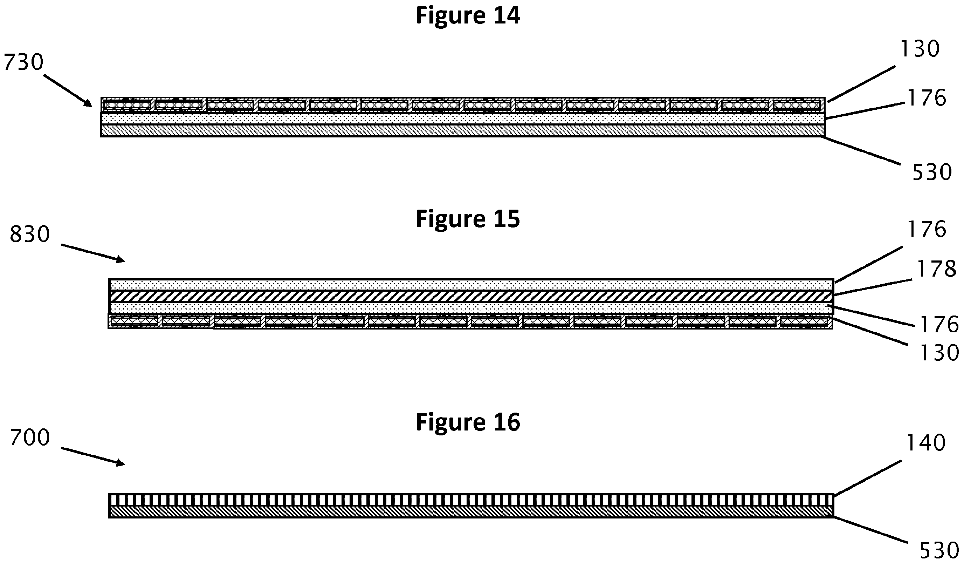

A sixth embodiment of a sensor surface-covering material indicated generally at 700 is illustrated in Figure 16. Sensor surface-covering material 700 has two layers laminated or adhered together which include a base layer which comprises an electrical property sensor layer 530 which forms a lower face of the sensor surface-covering material 700 and an upper layer which comprises an overcoat layer 140. Sensor surface-covering material 700 may be a sensor flooring material, a sensor underlay or a sensor walling material. Sensor surface-covering material 700 is suitable for sensing the presence of a conductive object such as water at a location. Moisture beneath a flooring material or a walling material can cause damage to the building and failure of the flooring or walling material. The moisture may be caused by a water leak, rising or penetrating damp for example due to the lack or failure of a damp proof membrane, or due to a freshly laid concrete floor or wall. Without such a sensor layer 530 to detect the presence of the moisture, it may not be evident until the flooring or walling material fails because the problem is hidden.

In an alternative embodiment, the electrical property sensor layer 530 may be replaced by a detectable electrical-property sensor layer 630 or a combined detectable electrical-property and mechanical-property sensor layer 730.

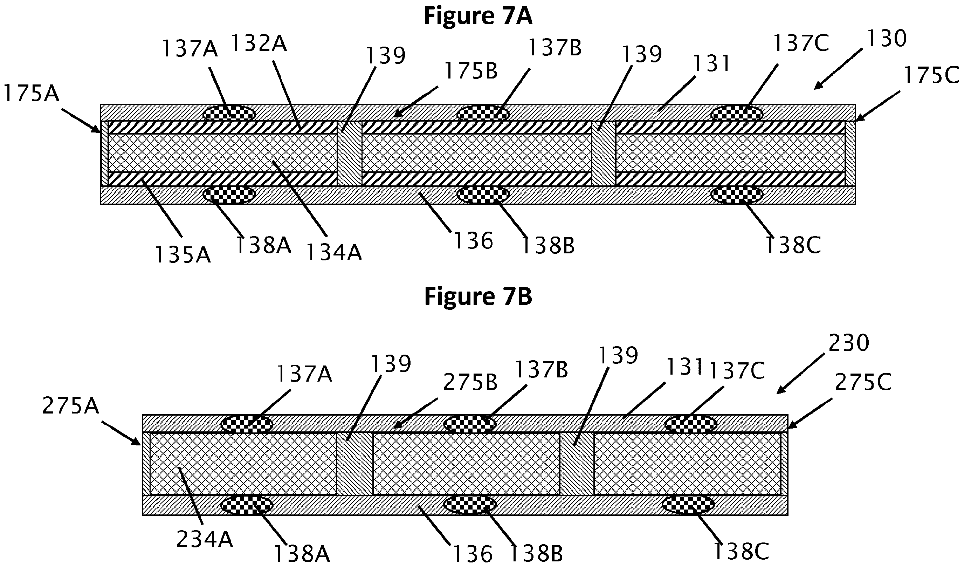

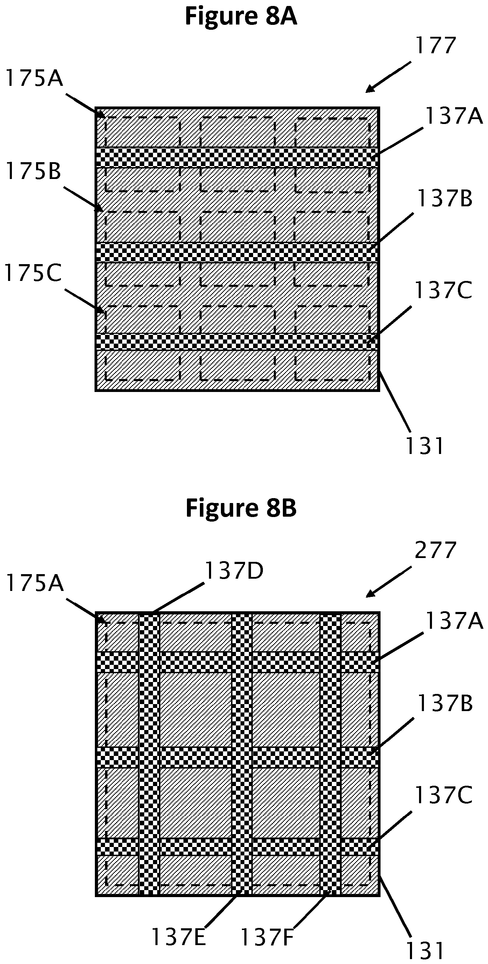

A first embodiment of a sensor layer for use in the sensor flooring material according to the invention indicated generally at 130 is illustrated in Figure 7A. Sensor layer 130 is a detectable mechanical-property sensor layer. The sensor layer 130 comprises a plurality of detectable mechanical-property sensors 175A,175B,175C arranged horizontally into one or more sensor arrays as shown in Figure 8A. The sensor layer 130 comprises five layers which comprise an upper printed electrical contact layer 131, an upper printed electrode layer 132A, a sensor material layer 134A, a lower printed electrode layer 135A and a lower printed electrical contact layer 136. The upper and lower electrical contact layers 131,136 are formed from a plastics material and each respectively have upper and lower conductive elements 137A,137B,137C,138A,138B,138C embedded therein such that upper electrical contact layer 131 has a conductive element 137A,137B,137C for each sensor 175A,175B,175C and lower electrical contact layer 136 has a conductive element 138A,138B,138C for each sensor 175A,175B,175C. In each sensor 175A,175B,175C, the respective sensor material layer 134A is arranged between the upper printed electrode layer 132A and the lower printed electrode layer 135A. The electrical contact layers 131,136 and electrode layers 132A,132B,132C,135A,135B,135C are conductive layers. The conductive elements 137A,137B,137C,138A,138B,138C and electrode layers 132A,132B,132C,135A,135B,135C are formed from a printable conducting material such as a conducting polymer and/or metal, for example copper or aluminium. The sensor material layer 134A comprises an electroactive polymer, a force sensing resistor, an electret and/or a piezoelectric material.

Each sensor 175A,175B,175C comprises an upper conductive element 137A,137B,137C, an upper electrode layer 132A, a sensor material layer 134A, a lower printed electrode layer 135A and a lower conductive element 138A,138B,138C. The upper electrode 132A is connected at one or more points to an upper conductive element 137A,137B,137C in the upper electrical contact layer 131 and the lower electrode 135A is connected at one or more points to a lower conductive element 138A,138B,138C in the lower electrical contact layer 136. Each sensor 175A,175B,175C is separated horizontally by a buffer 139 of plastics material. Each sensor 175A,175B,175C may have a circular or rectilinear shape which is a similar size to a heel of a shoe.

In an alternative embodiment, the sensor layer 130 may include one or more protective layers to protect and optionally insulate the first and second electrical contact layers 131,136. In an alternate embodiment, the sensor material layer 134A may be formed from a printable sensor material. In a further alternate embodiment, one or both of the upper printed electrical contact layer 131 and lower printed electrical contact layer 136 may be provided by a layer of conducting material or one or both of the upper printed electrode layer 132 and lower printed electrode layer 135 may be provided by a layer of electrode material.

A second embodiment of a sensor layer for use in the sensor flooring material according to the invention indicated generally at 230 is illustrated in Figure 7B. Sensor layer 230 is a detectable mechanical-property sensor layer. The sensor layer 230 comprises a plurality of detectable mechanical-property sensors 275A,275B,275C arranged into one or more sensor arrays as shown in Figure 8A. The sensor layer 230 comprises three layers which comprise an upper printed electrical contact layer 131, a sensor material layer 234A and a second electrical contact layer 136. The sensor material layer 234A is arranged between the upper printed electrical contact layer 131 and the lower printed electrical contact layer 136. The sensor material layer 234A is formed from a sensor material which has a detectable electrical property which changes when the sensor material is deformed or moved without the need for electrodes, for example a carbon nanotube/polymer blend, and/or a piezoresistive material. In an alternate embodiment, the sensor material layer 234A may be formed from a printable material. Sensor layer 230 is a detectable mechanical-property sensor layer as it is capable of detecting a change in a mechanical property.

Each sensor 275A,275B,275C comprises an upper conductive element 137A,137B,137C, a sensor material layer 234A and a lower conductive element 138A,138B,138C where the sensor material layer 234A is connected at one or more points on its upper side to the upper conductive element 137A,137B,137C in the upper electrical contact layer 131 and at one or more points on its lower side to the lower conductive element 138A,138B,138C in the lower electrical contact layer 136. Each sensor 275A,275B,275C is separated horizontally by a buffer 139 of plastics material. Each sensor 275A,275B,275C may have a circular or rectilinear shape which is a similar size to a heel of a shoe. In an alternative embodiment, each sensor 275A,275B,275C may have a shape which is the size of one or more shoes or of part of a room, depending upon the application or use of the sensor flooring and the degree of sensitivity which is required.

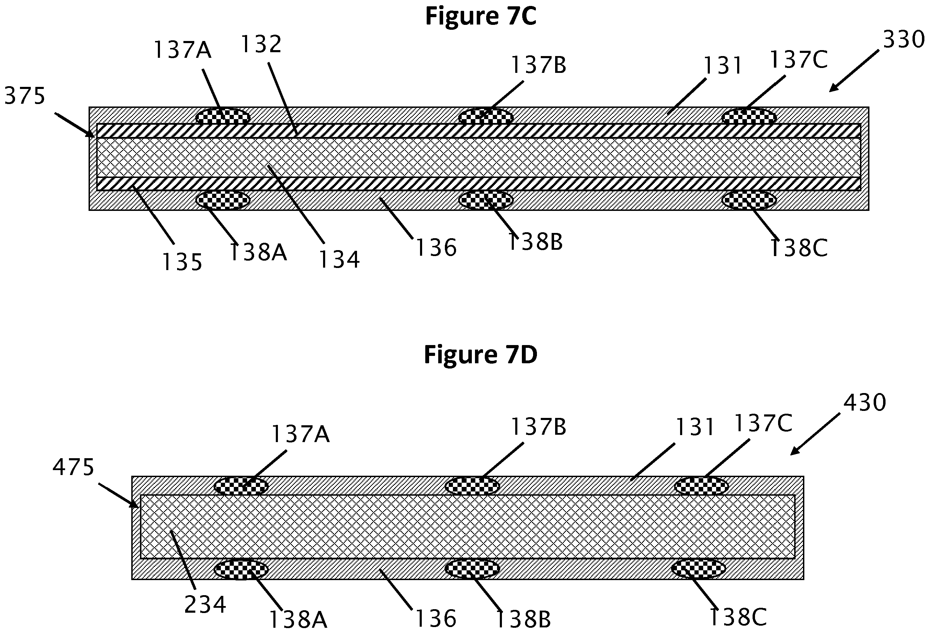

A third embodiment of a sensor layer for use in the flooring material according to the invention indicated generally at 330 is illustrated in Figure 7C. Sensor layer 330 is a detectable mechanical-property sensor layer. The sensor layer 330 comprises a detectable mechanical-property sensor 375 which comprises five layers which comprise an upper printed electrical contact layer 131, an upper printed electrode layer 132, a sensor material layer 134, a lower printed electrode layer 135 and a lower printed electrical contact layer 136. The upper printed electrical contact layer 131 comprises a plurality of upper conductive elements 137A,137B,137C. The lower printed electrical contact layer 136 comprises a plurality of lower conductive elements 138A,138B,138C. The sensor material layer 134 is arranged between the upper printed electrode layer 132 and the lower printed electrode layer 135. The upper printed electrode layer 132 is connected at one or more points on its upper side to each of the upper conductive elements 137A,137B,137C in the upper electrical contact layer 131. The lower printed electrode layer 135 is connected at one or more points on its lower side to each of the lower conductive elements 138A,138B,138C in the lower electrical contact layer 136. Sensor layer 330 is a detectable mechanical-property sensor layer as it is capable of detecting a change in a mechanical property.

In an alternative embodiment, the sensor layer 330 may include one or more protective layers to protect and optionally insulate the first and second electrical contact layers 131,136.

A fourth embodiment of a sensor layer for use in the flooring material according to the invention indicated generally at 430 is illustrated in Figure 7D. Sensor layer 430 is a detectable mechanical-property sensor layer. The sensor layer 430 comprises a detectable mechanical-property sensor 475 which comprises three layers which comprise an upper printed electrical contact layer 131, a sensor material layer 234 and a second lower printed electrical contact layer 136. The upper printed electrical contact layer 131 comprises a plurality of upper conductive elements 137A,137B,137C. The lower printed electrical contact layer 136 comprises a plurality of lower conductive elements 138A,138B,138C. The sensor material layer 134 is arranged between the upper printed electrical contact layer 131 and the lower printed electrical contact layer 136. The sensor material layer 134 is connected at one or more points on its upper side to the upper conductive element 137A,137B,137C in the upper electrical contact layer 131 and at one or more points on its lower side to the lower conductive element 138A,138B,138C in the lower electrical contact layer 136.

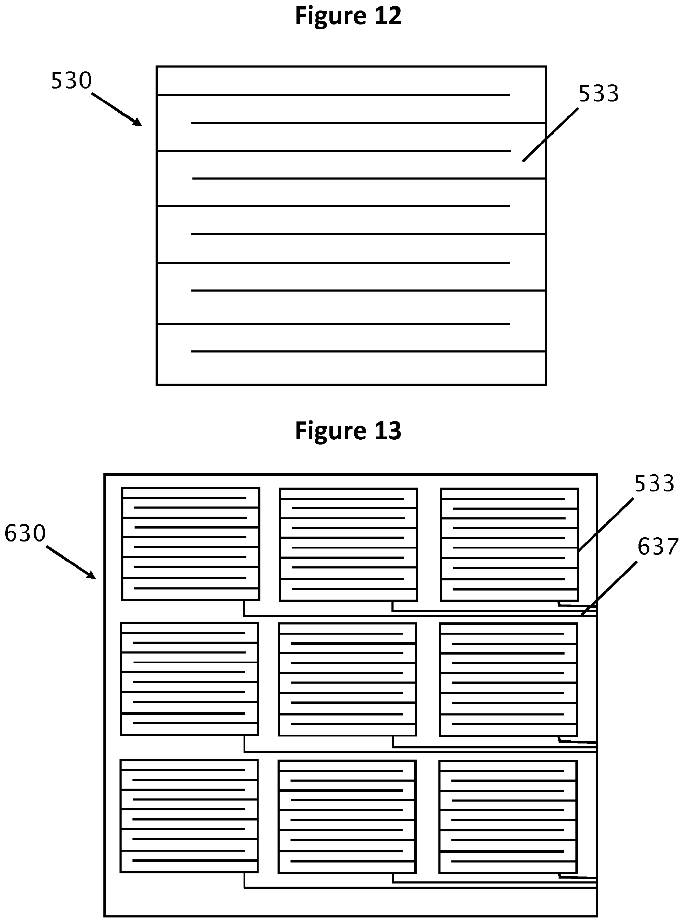

A fifth embodiment of a sensor layer for use in the flooring material according to the invention indicated generally at 530 is illustrated in Figure 12. Sensor layer 530 is a detectable electrical-property sensor layer. Sensor layer 530 comprises a layer of plastics material (not shown) and at least one detectable electrical-property sensor which is a conductive element sensor 533. Conductive element sensor 533 is screen printed on the layer of plastics material to form a sensor material layer. Accordingly, sensor layer 530 is suitable for sensing an electrical property such as resistivity or capacitance. The conductive element sensor 533 is applied so as to allow resistive and/or capacitive sensing where resistive sensing detects the presence of a conductive object such as water which may contact the sensor layer 530 and where capacitive sensing detects the proximity of a conductive object or of a material having a different dielectric property.

In an alternative embodiment, the conductive element sensor 533 may be applied to the sensor layer 530 by lamination, digital or gravure or flexo printing of a conductive ink (for example a conductive ink based on silver, copper, carbon, graphene, PEDOT:PSS, indium tin oxide, aluminium zinc oxide, carbon nanotubes and/or conductive nano wires).

A sixth embodiment of a sensor layer for use in the flooring material according to the invention indicated generally at 630 is illustrated in Figure 13. Sensor layer 630 is a detectable electrical-property sensor layer. Sensor layer 630 comprises a layer of plastics material and a plurality of detectable electrical-property sensors in the form of conductive element sensors 533 in designated areas of the sensor layer 630 and which are connected by conductive connectors 637 which allow the transmission of sensor data from the conductive element sensors 533 to a signal processor (not shown), wherein the conductive element sensors 533 and connectors 637 are screen printed on the sensor layer 630. The conductive element sensors 533, connectors 637 and sensor layer 630 form a sensor material layer. Accordingly, sensor layer 630 is suitable for sensing an electrical property such as resistivity or capacitance. The plurality of conductive element sensors 533 are applied so as to allow resistive and/or capacitive sensing where resistive sensing detects the presence of a conductive object in one or more of the designated areas of the sensor layer 630 and where capacitive sensing detects the proximity of a conductive object or of a material having a different dielectric property.

In an alternative embodiment, the conductive element sensor 533 may be applied to the sensor layer 530 by lamination, digital or gravure or flexo printing of a conductive ink (for example a conductive ink based on silver, copper, carbon, graphene, PEDOT:PSS, indium tin oxide, aluminium zinc oxide, carbon nanotubes and/or conductive nano wires).

Signal processing is used to analyse the output of the electrical property sensor layer 530,630 to distinguish the sensor data which relates to the presence of a conductive object from sensor data which relates to the proximity of a conductive object or of a material having a different dielectric property.

A seventh embodiment of a sensor layer for use in the flooring material according to the invention indicated generally at 730 is illustrated in Figure 14. Sensor layer 730 is a combined detectable electrical-property and mechanical-property sensor layer which comprises three layers which include a top layer comprising a detectable mechanical-property sensor layer in the form of a sensor layer 130 according to the first embodiment of the invention, a middle layer comprising an insulating layer 176 and a bottom layer comprising a detectable electrical-property sensor layer 530 according to the fifth embodiment of the invention. In an alternative embodiment, the applied mechanical stress sensitive sensor layer 130 may be replaced by an applied mechanical stress sensitive sensor layer 230,330,430 according to the second, third or fourth embodiments of the invention. In an alternative embodiment, the electrical property sensor layer 530 may be replaced by an electrical property sensor layer 630 according to the sixth embodiment of the invention.

By inclusion of a detectable mechanical-property sensor layer 130 in sensor layer 730, the signal processing of the output of the combined sensor layer 730 is enhanced as the mechanical detectable property data may be used to help distinguish the sensor data which relates to the presence of a conductive object from sensor data which relates to the proximity of a conductive object or of a material having a different dielectric property.

Where an electrical property sensor layer is needed to detect the presence of a conductive object at a location, electrical property sensor layer 530 should form an external surface of the sensor surface-covering material 100,200,300,400,500,600,700 in which the sensor layer 730 is used.

An eighth embodiment of a sensor layer for use in the flooring material according to the invention indicated generally at 830 is illustrated in Figure 15. Sensor layer 830 is a combined detectable electrical-property and mechanical-property sensor layer which comprises four layers which include a top layer including a first insulating layer 176, an upper middle layer including a detectable electrical-property sensor layer 178 for detecting proximity of a conductive object or of a body having a different dielectric property, a lower middle layer including a second insulating layer 176 and a bottom layer including a detectable mechanical-property sensor layer in the form of a sensor layer 130 according to the first embodiment of the invention. Detectable electrical-property sensor layer 178 comprises a plurality of capacitor sensors for detecting a change in projected capacitance and conductive connectors.

In an alternative embodiment, the detectable mechanical-property sensor layer 130 may be replaced by a detectable mechanical-property sensor layer according to the second, third or fourth embodiment 230,330,430. In a further alternative embodiment, the detectable mechanical-property sensor layer 130 may be omitted for applications where sensing of a detectable mechanical-property is not required, for example where the sensor layer 830 is used in a sensor walling material.

A first embodiment of a sensor array for use in a sensor layer 130 for a sensor flooring material according to the invention indicated generally at 177 is illustrated in Figure 8A. Sensor array 177 comprises a plurality of sensors 175A,175B,175C arranged in a horizontal array formed by rows of sensors 175A,175B,175C wherein each row of sensors 175A,175B,175C is connected at one or more points by a respective array of parallel upper conductive elements 137A,137B,137C and parallel lower conductive elements (not shown). The plurality of sensors 175A,175B,175C provides the sensor array 177 with a degree of redundancy such that the sensor array 177 continues to function over the lifetime of the sensor flooring material 100,200,300,400,500 according to the invention even if it is placed in a high footfall environment; and provides the sensor flooring material with the functionality that sensing may be carried out on individual parts of the sensor flooring material separately such that information about where people enter a room or corridor, where a fall or impact happened, and/or where people spend most of the time in a room or corridor could be sensed which information could be used for statistical analysis or to activate equipment such as an alarm, lighting, heating or other appliances.

In an alternative embodiment, the sensor array 177 or the sensor layer 130,230 may comprise additional upper and lower conductive elements 137A,137B,137C,138A,138B,138C in the upper and lower electrical contact layers 131,136 respectively to provide redundant electrical connectivity for the sensors 175A,175B,175C, for example upper and/or lower conductive elements which are at an angle to upper and lower conductive elements 137A,137B,137C,138A,138B,138C such as perpendicular to them. In an alternative embodiment, the plurality of sensors 175A,175B,175C according to the first embodiment of the invention may be replaced by a plurality of sensors 275A,275B,275C according to the second embodiment of the invention such that the sensor array 177 is suitable for use in a sensor layer 230. In an alternative embodiment, the plurality of sensors 175A,175B,175C may be replaced by a plurality of conductive element sensors 533 and/or a plurality of capacitor sensors.

A second embodiment of a sensor array for use in a sensor layer 330 for a sensor flooring material according to the invention indicated generally at 277 is illustrated in Figure 8B. Sensor array 277 comprises a sensor 375 according to the third embodiment of the invention having an array of upper conductive elements 137A,137B,137C,137D,137E,137F and corresponding multiple lower conductive elements (not shown). The array of multiple conductive elements comprises a first set of parallel conductive elements 137A,137B,137C which are arranged in a first direction and a second set of parallel conductive elements 137D,137E,137F which are arranged at a perpendicular angle to the first set of parallel conductive elements 137A,137B,137C. The array of multiple conductive elements 137A,137B,137C,137D,137E,137F provides the sensor array 277 with a degree of redundancy such that the sensor array 277 continues to function over the lifetime of the sensor flooring material 100,200,300,400,500 according to the invention.

In an alternative embodiment, the sensor array 277 or the sensor layer 330 may comprise additional upper and lower conductive elements 137A,137B,137C,137D,137E,137F in the upper and lower electrical contact layers 131,136 respectively to provide additional redundant electrical connectivity for the sensor 375. In an alternative embodiment, sensor 375 may be replaced by a sensor 475 such that the sensor array 277 is suitable for use in a sensor layer 430.

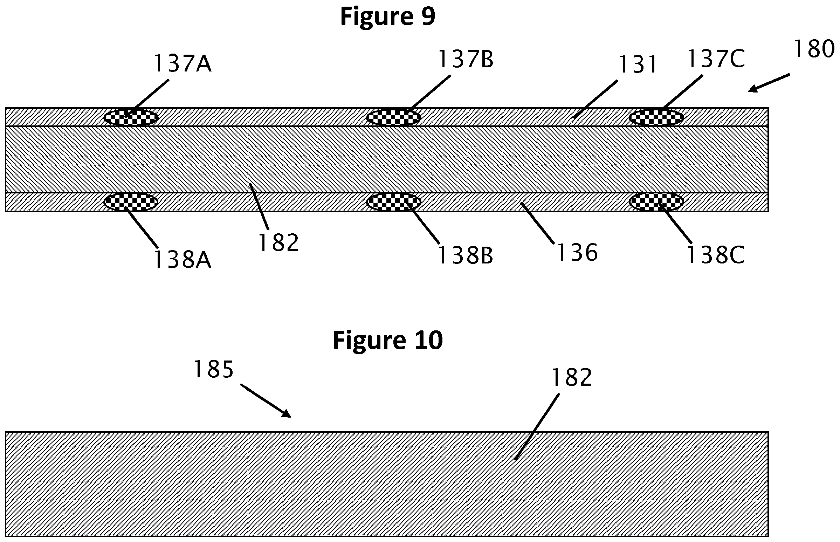

A signalling layer for use in a signalling flooring material 604A,604B according to the invention indicated generally at 180 is illustrated in Figure 9. A signalling flooring material 604A,604B is a sensor flooring material 100,200,300,400,500 where the sensor layer 130 has been replaced by a signalling layer 180. The signalling layer 180 comprises three layers which comprise an upper printed electrical contact layer 131, a synthetic layer 182 and a lower electrical contact layer 136. The upper electrical contact layer 131 comprises a plurality of upper conductive elements 137A,137B,137C and the lower electrical contact layer 136 comprises a plurality of lower conductive elements 138A,138B,138C. The spacer layer 182 is arranged between the upper printed electrical contact layer 131 and the lower printed electrical contact layer 136. The synthetic layer 182 is formed from a synthetic material. The signalling layer 180 has approximately the same thickness as sensor layer 130,230,330,430,530,630,730,830.

In an alternative embodiment, the signalling layer 180 may include one or more protective layers to protect and optionally insulate the first and second electrical contact layers 132,136. In an alternate embodiment, the spacer layer 182 may be formed from a printable material. In a further alternative embodiment, the upper and lower electrical contact layers 131,136 may include additional conductive elements. In a further alternative embodiment, the signalling layer 180 may include one electrical contact layer 131 and a synthetic layer 182.

A spacer layer for use in the spacer flooring material of the sensor flooring system according to the invention indicated generally at 185 is illustrated in Figure 10. The spacer flooring material 606 is a sensor flooring material 100,200,300,400,500 where the sensor layer 130 has been replaced by a spacer layer 185. The spacer layer 185 comprises one layer which comprises a synthetic layer 182. The spacer layer 185 has approximately the same thickness as sensor layer 130,230,330,430,530,630,730,830 or signalling layer 180.

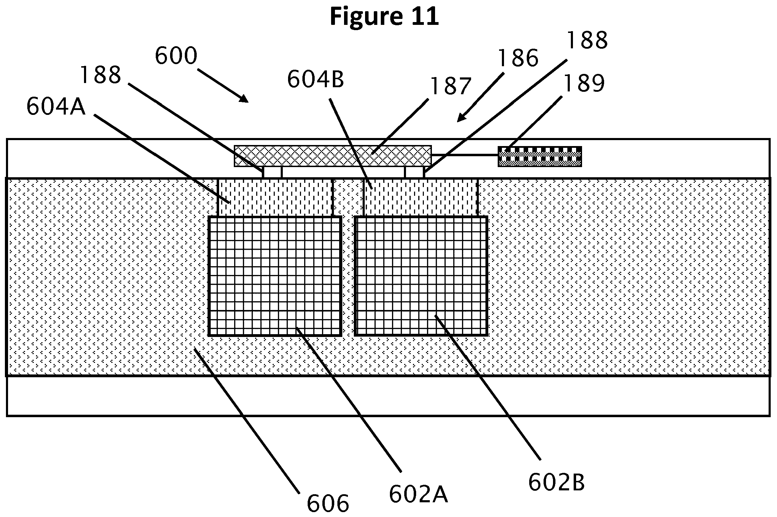

A sensor surface-covering system in the form of a sensor flooring system indicated generally at 600 is illustrated in Figure 11. The sensor flooring system 600 comprises three different types of synthetic flooring material which are two regions of sensor flooring material 602A,602B, two regions of signalling flooring material 604A,604B and a non-sensing flooring material 606 and an electrical housing indicated generally at 186 comprising electrical components for the operation of the sensor.

The synthetic sensor flooring material 602A,602B may be a synthetic flooring material 100 according to the first embodiment of the invention where the sensor layer 130 is as illustrated in Figure 7A and comprises a sensor array 177 as illustrated in Figure 8A. The first region of synthetic sensor flooring material 602A is placed in an area where sensing is required and the second region of sensor flooring material 602B is placed in an area where additional sensing is required or where a reference level of sensing may be measured. For example, the first region of sensor flooring material 602A may be used to provide an activation region such that when activity is sensed in that first region of sensor flooring material 602A, a signal is sent or equipment is activated; and the second region of sensor flooring material 602B may be used to provide a deactivation region such that when activity is sensed in that second region of sensor flooring material 602B, a further signal is sent or equipment is deactivated. Alternatively, the first region of sensor flooring material 602A may be placed in an area of high sensing activity such as an area of high footfall or high vibrational activity and the second region of sensor flooring material 602B may be placed in an area of low sensing activity to provide a reference level.

The synthetic signalling flooring material 604A,604B may be a synthetic flooring material 100 according to a first embodiment of the invention where the sensor layer 130 is replaced by a signalling layer 180 as illustrated in Figure 9. Synthetic signalling flooring material 604A,604B is placed to connect synthetic sensor flooring material 602A,602B to electrical housing 186 via electrical connectors 188 as the signalling layer 180 provides an electrical connection.

The synthetic non-sensing flooring material 606 may be a synthetic flooring material 100 according to a first embodiment of the invention where the sensor layer 130 is replaced by a spacer layer 185 as illustrated in Figure 10. Synthetic non-sensing flooring material 606 is provided in the other areas such that flooring system 600 is in the form of a continuous sheet. As the spacer layer 185 has a lower cost of manufacture than the sensor layer 130 and the signalling layer 180, the provision of the three different kinds of flooring material 602A,602B,604A,604B,606 reduces the overall cost of the flooring material 600.

The electrical housing 186 is for processing a signal generated by the sensor material and comprises a signal processor 189 and a detection system 187. Where the sensor layer 130 is replaced by a detectable electrical-property sensor layer 530,630, the signal processor 189 detects contact between the layer 530,630 with a conductive object such as water by detecting a change in the resistivity of the electrical property sensor layer 530,630.

In an alternative embodiment where the sensor layer 130 is replaced by an electrical property sensor layer 530,630 which includes one or more capacitors, the signal processor 189 is programmed to analyse the signalling data to differentiate between contact with a conductive object from proximity of a conductive object or of an object having a different dielectric property so that the location of the conductive object either above or below the sensor surface-covering system 600 can be determined. The signal processor 189 is also programmed to differentiate a proximity signal for a small conductive body (such as a hazard on a flooring system) and a large conductive body (such as a human or animal body).

In an alternative embodiment, where the sensor layer 130 is replaced by a combined detectable electrical-property and mechanical-property sensor layer 730, the signal processor 189 is programmed to detect contact between the layer 530,630 with a conductive object such as water by detecting a change in the resistivity of the electrical property sensor layer 530,630 and a physical property such as applied mechanical stress for example pressure, vibration and/or movement through detecting a change in the signal from the applied mechanical stress sensitive layer 130,230,330,430.

In an alternative embodiment, where the sensor layer 130 is replaced by a combined detectable electrical-property and mechanical-property sensor layer 830 or by a combined sensor layer 730 which includes one or more capacitors, the signal processor 189 may be programmed to analyse the signal so as to differentiate the presence of different types of object depending upon the nature of the signal such as the proximity of a conductive object and/or presence of applied mechanical stress. In particular, the signal processor 189 may be programmed to differentiate the proximity of a conductive object above or below the sensor surface-covering system 600. Examples of applications of this signal analysis include:
if there is a signal indicating proximity of a conductive object but no applied mechanical stress signal, then this would indicate the presence of a light conductive object which is more likely to be a hazard such as water or organic material such as a grape or a banana skin on the flooring system. The detection system may be programmed to generate an alarm to alert the building owner to the hazard and whether it is determined to be above or below the sensor surface-covering system 600;
if there is a signal indicating proximity of a conductive object with an applied mechanical stress signal, then this would indicate the presence of a human or animal body;
if there is a detected applied mechanical stress signal but no signal indicating proximity of a conductive object, this would indicate the presence or movement of a non-conductive object such as a suitcase or a shopping trolley.

In an alternative embodiment, the housing may additionally comprise a communication device for communicating with a data storage centre and/or a data analysis centre. In an alternative embodiment, the housing may comprise a data storage device and data analysis centre. In an alternative embodiment, the detection system 187 may be connected electrically or wirelessly with a door opening mechanism, a lighting circuit and/or a heating mechanism to allow the sensor flooring system 600 to be used to open a door, operate lighting and/or heating.

In an alternate embodiment, the sensor layer 130 may be replaced by a sensor layer 230,330,430,530,630,730,830. In a further alternative embodiment, the synthetic flooring material 100 in the sensor flooring material 602A,602B, signalling flooring material 604A,604B, and/or non-sensing flooring material 606 may be a synthetic flooring material 200,300,400,500,700 according to the second, third, fourth, fifth or sixth embodiments of the invention. In an alternate embodiment, the synthetic flooring material 100 in the sensor flooring material 602A,602B, signalling flooring material 604A,604B and non-sensing flooring material 606 may be provided as a single continuous synthetic flooring material having sensor regions 602A,602B, signalling regions 604A,604B where the sensor layer 130 is replaced by a signalling layer 180 and non-sensing regions 606 where the sensor layer 130 is replaced by a spacer layer 185.

The invention is further illustrated with reference to the following examples which are not intended to limit the scope of the invention claimed.

### PREPARATIVE EXAMPLE 1

Plastisols having the formulations given in Table 1 were produced as described below.

**TABLE 1**

| Plastisol Formulations | | |
|---|---|---|
| | A. Weight/kg | B. Weight/kg |
| PVC polymer | 15 | 20 |
| PVC polymer | 5 | - |
| Di-isodecyl phthalate | 6.5 | 6.5 |
| Calcium magnesium carbonate | - | 5 |
| Blend of aliphatic hydrocarbons with a neutral wetting and dispersing component | - | 0.4 |
| Liquid barium zinc preparation containing organic barium compounds | 0.3 | 0.4 |
| A solution of 10,10' oxybisphenoxyarsine in epoxidised soya bean oil | - | 0.2 |
| Black pigment provided as a dispersion of carbon black in a plasticiser | - | 0.02 |

In each case, the ingredients were weighed in to a 50 litre steel vessel and mixed by a trifoil shaft mixer at 100 rpm for 4 minutes and a dissolver shaft at 1800 rpm for 2 minutes. Aluminium oxide particles (from Washington Mills) size F40 (FEPA Standard 42-GB-1984 measurement) were weighed into plastisol B (10% w/w) and mixed.

### PREPARATIVE EXAMPLE 2

Two formulations E and F comprising a polyolefin and a rubber were prepared as follows:

**TABLE 2**

| Polyolefin and Rubber Formulations | | |
|---|---|---|
| | E. Weight/kg | F. Weight/kg |
| Styrene butadiene rubber with 23 molar% styrene content | 22 | - |
| Natural rubber | - | 7 |
| Styrene resin | 9 | 9 |
| Filler | 45 | 45 |
| Ionomer | 15 | 20 |
| Ethylene butyl acrylate | 5 | - |
| Production aid | 5 | 5 |

The ingredients listed in Table 2 for each formulation were compounded in a rubber compounder to form a sheet. The sheets were then granulated and calendered in a roller mill to form a second sheet which was then granulated to form granules having a size of from 0.1 to 40 mm.

### PREPARATIVE EXAMPLE 3

Coating compositions C and D for use in the invention were prepared as follows.

A UV curable composition containing from 20 to 30 parts by weight of oxybis(methyl-2,1-ethanediyl) diacrylate, from 10 to less than 20 parts by weight of 2-phenoxyethyl acrylate, from 10 to less than 20 parts by weight of acrylate resin, from 2.5 to 5 parts by weight of (1-methyl-1,2-ethanediyl)bis[oxy(methyl-2,1-ethanediyl)]]diacrylate, from 1 to 5 parts by weight of benzophenone and from 1 to 5 parts by weight of 1-6,hexanedioldiacrylate was mixed together to obtain coating composition C. Non-slip particles in the form of glass particles having a size of about 75 to 106 µm were added to the UV curable mixture at a rate of 15 parts by weight of the glass spheres to 100 parts by weight of the UV curable mixture to obtain coating composition D.

### EXAMPLE 4

In this Example, the preparation of a flooring material as depicted in Figure 1 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before a sensor layer was applied to the substrate layer. The resulting system was laminated together by the application of pressure and heat to produce a flooring material according to the invention.

### EXAMPLE 5

In this Example, an alternative method for the preparation of a flooring material as depicted in Figure 1 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before adhesive was applied to the underside of the substrate layer. A sensor layer was applied to the adhesive. The resulting system was adhered together by the application of pressure to produce a flooring material according to the invention.

### EXAMPLE 6

In this Example, the preparation of a flooring material as depicted in Figure 2 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before a sensor layer and an overcoat layer formed from plastisol A were applied. The resulting system was laminated together by the application of pressure and heat.

Coating composition C was applied by roller to the laminated system at coverage rate of 20 grams per square metre. The coated system was cured using UV radiation to produce a flooring material according to the invention.

### EXAMPLE 7

In this Example, the preparation of a flooring material as depicted in Figure 3 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before a sensor layer, an overcoat layer formed from plastisol A and a wood print PVC film decorative layer were applied. The resulting system was laminated together by the application of pressure and heat.

Coating composition C was applied by roller to the laminated system at coverage rate of 20 grams per square metre. The coated system was cured using UV radiation to produce a flooring material according to the invention.

### EXAMPLE 8

In this Example, the preparation of a flooring material as depicted in Figure 4 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before a sensor layer, an overcoat layer formed from plastisol A and a wood print PVC film decorative layer were applied. The resulting system was laminated together by the application of pressure and heat.

Coating composition D was applied by roller to the laminated system at coverage rate of 20 grams per square metre. The coated system was cured using UV radiation to produce a non-slip flooring material according to the invention.

### EXAMPLE 9

In this Example, the preparation of a sensor underlay 500B as depicted in Figure 6 is described.

Granulated formulation E, prepared as described in Preparatory Example 2 was spread over a honeycomb structure on a steel belt in a double belt press and then the material was pressed at a temperature above 130°C such that it was vulcanised. A layer of glue was applied to the rubber layer obtained. A sensor layer was then applied and the resulting system was adhered together by the application of pressure.

### EXAMPLE 10

In this Example, an alternative preparation of sensor underlay 500B as depicted in Figure 6 is described. In this embodiment, the flooring material lacks the honeycomb structure.

Granulated formulation F, prepared as described in Preparatory Example 2 was spread over a steel belt in a double belt press and then the material was pressed at a temperature above 130°C such that it was vulcanised. A sensor layer was then applied and the resulting system was laminated together by the application of pressure and heat.

### EXAMPLE 11

In this Example, a preparation of flooring material 500A as depicted in Figure 6 is described.

Plastisol A, prepared as described in Preparatory Example 1 but with the addition of gas filled microspheres in the form of Expancel (trademark) manufactured by Akzo Nobel to form a deformable plastics material was spread coated onto a honeycomb structure on a substrate layer to a thickness of 3mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers. A layer of glue was applied to the rubber layer obtained. A sensor layer was then applied and the resulting system was adhered together by the application of pressure. As an alternative to the gas filled microspheres, a chemical blowing agent such as an azodicarbonamide could be used.

### EXAMPLE 12

In this Example, an alternative preparation of flooring material 500A as depicted in Figure 5 is described.

Plastisol A, prepared as described in Preparatory Example 1 but with the addition of gas filled microspheres in the form of Expancel (trademark) manufactured by Akzo Nobel to form a deformable plastics material was spread coated on a substrate layer to a thickness of 3mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers. A sensor layer was then applied and the resulting system was laminated together by the application of heat and pressure. As an alternative to the gas filled microspheres, a chemical blowing agent such as an azodicarbonamide could be used.

## Claims

1. A sensor surface-covering material (100, 200, 300, 400, 500, 600, 700) comprising a layer of synthetic material and a sensor layer (130, 230, 330, 430, 530, 630, 730, 830) wherein the sensor layer (130, 230, 330, 430, 530, 630, 730, 830) is configured to detect a change in an electrical property which is resistance and/or capacitance and wherein the sensor layer (130, 230, 330, 430, 530, 630, 730, 830) comprises a combined detectable electrical-property and mechanical-property sensor layer **characterized in that** the sensor layer (130, 230, 330, 430, 530, 630, 730, 830) comprises three layers: a top layer comprising a detectable mechanical-property sensor layer (130); a middle layer comprising an insulating layer (176); and a bottom layer comprising a detectable electrical-property sensor layer (530).

2. A sensor surface-covering material (100, 200, 300, 400, 500, 600, 700) as defined in Claim 1 wherein the sensor layer (130, 230, 330, 430, 530, 630, 730, 830) is configured to detect contact with a conductive object and/or proximity of a conductive object; preferably the sensor layer(130, 230, 330, 430, 530, 630, 730, 830) comprises one or more conductive elements (137A, 137B, 137C, 137D, 137E, 137F, 138A, 138B, 138C) provided on a layer of synthetic material.

3. A sensor surface-covering material (100, 200, 300, 400, 500, 600, 700) as defined in Claim 1 or Claim 2 wherein the sensor layer (130, 230, 330, 430, 530, 630, 730, 830) comprises a sensor array (177, 277) comprising a plurality of sensors (175A, 175B, 175C, 275A,275B, 275C).

4. A sensor surface-covering material (100, 200, 300, 400, 500, 600, 700) as defined in any one of the preceding Claims wherein the sensor layer (130, 230, 330, 430, 530, 630, 730, 830) comprises a sensor material layer which is a detectable mechanical-property sensor layer (130, 230, 330) which detects a change in a mechanical property and at least one electrically conductive layer (132, 136); preferably the sensor layer comprises an upper electrically conductive layer (132) which in use is positioned above the sensor material layer and a lower electrically conductive layer (136) which in use is positioned below the sensor material layer.

5. A sensor surface-covering material (100, 200, 300, 400, 500, 600, 700) as defined in Claim 4 wherein the detectable mechanical-property sensor layer (130, 230, 330) detects application of mechanical stress by an object to the detectable mechanical-property sensor layer; preferably the detectable mechanical-property sensor layer (130, 230, 330) detects the application of applied mechanical stress by an object by vibration of the sensor material and/or by deformation of the sensor material; preferably the detectable mechanical-property material comprises an electroactive polymer, an electret, a piezoelectric material, a carbon nanotube/polymer blend, a piezoresistive material and/or a force sensing resistor.

6. A sensor surface-covering material (100, 200, 300, 400, 500, 600, 700) as defined in Claim 5 wherein the detectable mechanical-property sensor layer (130, 230, 330) comprises a detectable electrical-property sensor (375, 475) which comprises one or more conductive element sensors and/or one or more capacitor sensors.

7. A sensor surface-covering material (100, 200, 300, 400, 500, 600, 700) as defined in any one of the preceding Claims wherein the detectable mechanical-property sensor layer (130, 230, 330) comprises a detectable mechanical-property sensor (375, 475) and wherein the surface-covering material comprises a deflection aid to increase movement of the detectable mechanical-property sensor (375, 475); preferably the deflection aid is provided on the layer of synthetic material to impinge upon the detectable mechanical-property sensor; preferably the defection aid is a stud or a profile.

8. A sensor surface-covering material (100, 200, 300, 400, 500, 600, 700) as defined in any one of the preceding Claims wherein at least one layer of the sensor layer comprises a protective layer (140, 150).

9. A sensor surface-covering material (100, 200, 300, 400, 500, 600, 700) as defined in any one of the preceding Claims wherein the surface-covering material is a wall-covering material, a floor-covering material or an underlay for placing under conventional flooring material.

10. A sensor surface-covering material (100, 200, 300, 400, 500, 600, 700) as defined in Claim 9 wherein the floor-covering material or the underlay for placing under conventional flooring material comprises a support structure.

11. A sensor surface-covering material (100, 200, 300, 400, 500, 600, 700) as defined in any one of the preceding Claims wherein at least one layer of the sensor layer comprises a printable material.

12. A sensor surface-covering material (100, 200, 300, 400, 500, 600, 700) as defined in any one of the preceding Claims which comprises a plurality of different regions comprising at least a sensor region where the surface-covering material comprises a sensor layer and a non-sensing region where the sensor layer has been replaced by a spacer layer wherein the spacer layer is formed from a synthetic material; preferably the spacer layer has substantially the same thickness as the sensor layer.

13. A sensor surface-covering material (100, 200, 300, 400, 500, 600, 700) as defined in Claim 12 wherein the surface-covering material comprises a signalling region where the sensor layer has been replaced by a signalling layer which comprises at least one conductive layer.

14. A sensor surface-covering system comprising a sensor surface-covering material as defined in any one of the preceding Claims and an electrical component housing (186) for processing a signal generated by the sensor layer; preferably the housing (186) comprises a signal processor; preferably the housing comprises a detection system.

15. A sensor surface-covering system as defined in Claim 14 which comprises a signal processor which is programmed to differentiate different types of sensor layer signal data and is configured to determine the proximity or location of an object, the type of object and/or behaviour of the object.

## Patentansprüche

1. Oberflächendeckendes Sensormaterial (100, 200, 300, 400, 500, 600, 700), umfassend eine Schicht aus Synthetikmaterial und eine Sensorschicht (130, 230, 330, 430, 530, 630, 730, 830), wobei die Sensorschicht (130, 230, 330, 430, 530, 630, 730, 830) konfiguriert ist, um eine Änderung in einer elektrischen Eigenschaft zu detektieren, bei der es sich um einen Widerstand und/oder eine Kapazität handelt, und wobei die
Sensorschicht (130, 230, 330, 430, 530, 630, 730, 830) eine kombinierte detektierbare elektrische Eigenschaft- und mechanische Eigenschaft-Sensorschicht umfasst, **dadurch gekennzeichnet, dass** die
Sensorschicht (130, 230, 330, 430, 530, 630, 730, 830) drei Schichten umfasst: eine obere Schicht, umfassend eine detektierbare mechanische Eigenschaft-Sensorschicht (130); eine mittlere Schicht, umfassend eine Isolierschicht (176); und eine untere Schicht, umfassend eine detektierbare elektrische Eigenschaft-Sensorschicht (530).

2. Oberflächendeckendes Sensormaterial (100, 200, 300, 400, 500, 600, 700) nach Anspruch 1, wobei die Sensorschicht (130, 230, 330, 430, 530, 630, 730, 830) konfiguriert ist, um Kontakt zu einem leitenden Objekt und/oder Nähe eines leitenden Objekts zu detektieren; vorzugsweise wobei die Sensorschicht (130, 230, 330, 430, 530, 630, 730, 830) ein oder mehrere leitende Elemente (137A, 137B, 137C, 137D, 137E, 137F, 138A, 138B, 138C) umfasst, die auf einer Schicht aus synthetischem Material bereitgestellt sind.

3. Oberflächendeckendes Sensormaterial (100, 200, 300, 400, 500, 600, 700) nach Anspruch 1 oder Anspruch 2, wobei die Sensorschicht (130, 230, 330, 430, 530, 630, 730, 830) eine Sensoranordnung (177, 277) umfasst, die eine Vielzahl von Sensoren (175A, 175B, 175C, 275A, 275B, 275C) umfasst.

4. Oberflächendeckendes Sensormaterial (100, 200, 300, 400, 500, 600, 700) nach einem der vorangehenden Ansprüche, wobei die Sensorschicht (130, 230, 330, 430, 530, 630, 730, 830) eine Sensormaterialschicht, bei der es sich um eine detektierbare mechanische Eigenschaft-Sensorschicht (130, 230, 330) handelt, die eine Änderung in einer mechanischen Eigenschaft detektiert, und mindestens eine elektrisch leitende Schicht (132, 136) umfasst; die Sensorschicht vorzugsweise eine obere elektrisch leitende Schicht (132), die in Gebrauch oberhalb der Sensormaterialschicht positioniert ist, und eine untere elektrisch leitende Schicht (136), die in Gebrauch unterhalb der Sensormaterialschicht positioniert ist, umfasst.

5. Oberflächendeckendes Sensormaterial (100, 200, 300, 400, 500, 600, 700) nach Anspruch 4, wobei die detektierbare mechanische Eigenschaft-Sensorschicht (130, 230, 330) ein Anlegen einer mechanischen Belastung durch ein Objekt an die detektierbare mechanische Eigenschaft-Sensorschicht detektiert; die detektierbare mechanische Eigenschaft-Sensorschicht (130, 230, 330) vorzugsweise das Anlegen einer angelegten mechanischen Belastung durch ein Objekt durch Vibration des Sensormaterials und/oder durch Deformation des Sensormaterials detektiert; vorzugsweise das detektierbare mechanische Eigenschaft-Material ein elektroaktives Polymer, ein Elektret, ein piezoelektrisches Material, eine Kohlenstoff-Nanoröhrchen/Polymer-Mischung, ein piezoresistives Material und/oder einen Krafterfassungswiderstand umfasst.

6. Oberflächendeckendes Sensormaterial (100, 200, 300, 400, 500, 600, 700) nach Anspruch 5, wobei die detektierbare mechanische Eigenschaft-Sensorschicht (130, 230, 330) einen detektierbare elektrische Eigenschaft-Sensor (375, 475) umfasst, der ein oder mehrere leitende Elementsensoren und/oder ein oder mehrere Kondensatorsensoren umfasst.

7. Oberflächendeckendes Sensormaterial (100, 200, 300,400, 500, 600, 700) nach einem der vorangehenden Ansprüche, wobei die detektierbare mechanische Eigenschaft-Sensorschicht (130, 230, 330) einen detektierbare mechanische Eigenschaft-Sensor (375, 475) umfasst und wobei das oberflächendeckende Material eine Biegungshilfe umfasst, um eine Bewegung des detektierbare mechanische Eigenschaft-Sensors (375, 475) zu erhöhen; die Biegungshilfe vorzugsweise auf der Schicht aus synthetischem Material bereitgestellt ist, um auf den detektierbare mechanische Eigenschaft-Sensor aufzutreffen; die Biegungshilfe vorzugsweise ein Bolzen oder ein Profil ist.

8. Oberflächendeckendes Sensormaterial (100, 200, 300, 400, 500, 600, 700) nach einem der vorangehenden Ansprüche, wobei mindestens eine Schicht der Sensorschicht eine Schutzschicht (140, 150) umfasst.

9. Oberflächendeckendes Sensormaterial (100, 200, 300, 400, 500, 600, 700) nach einem der vorangehenden Ansprüche, wobei das oberflächendeckende Material ein wanddeckendes Material, ein bodendeckendes Material oder eine Unterlage zum Platzieren unter herkömmlichem Bodenbelagmaterial ist.

10. Oberflächendeckendes Sensormaterial (100, 200, 300, 400, 500, 600, 700) nach Anspruch 9, wobei das bodendeckende Material oder die Unterlage zum Platzieren unter herkömmlichem Bodenbelagmaterial eine Stützstruktur umfasst.

11. Oberflächendeckendes Sensormaterial (100, 200, 300, 400, 500, 600, 700) nach einem der vorangehenden Ansprüche, wobei mindestens eine Schicht der Sensorschicht ein bedruckbares Material umfasst.

12. Oberflächendeckendes Sensormaterial (100, 200, 300, 400, 500, 600, 700) nach einem der vorangehenden Ansprüche, das eine Vielzahl unterschiedlicher Regionen umfasst, die mindestens eine Sensorregion umfassen, wo das oberflächendeckende Material eine Sensorschicht und eine nicht erfassende Schicht umfasst, wo die Sensorschicht durch eine Abstandsschicht ersetzt wurde, wobei die Abstandsschicht aus einem Synthetikmaterial geformt ist; wobei die Abstandsschicht im Wesentlichen dieselbe Dicke wie die Sensorschicht aufweist.

13. Oberflächendeckendes Sensormaterial (100, 200, 300, 400, 500, 600, 700) nach Anspruch 12, wobei das oberflächendeckende Material eine Signalisierungsregion umfasst, wo die Sensorschicht durch eine Signalisierungsschicht ersetzt wurde, die mindestens eine leitende Schicht umfasst.

14. Oberflächendeckendes Sensorsystem, umfassend ein oberflächendeckendes Sensormaterial nach einem der vorangehenden Ansprüche, und ein elektrisches Komponentengehäuse (186) zum Verarbeiten eines von der Sensorschicht generierten Signals; wobei das Gehäuse (186) vorzugsweise einen Signalprozessor umfasst; wobei das Gehäuse vorzugsweise ein Detektionssystem umfasst.

15. Oberflächendeckendes Sensorsystem nach Anspruch 14, das einen Signalprozessor umfasst, der programmiert ist, um unterschiedliche Typen von Sensorschichtsignaldaten zu unterscheiden, und konfiguriert ist, um die Nähe oder den Standort eines Objekts, den Typ des Objekts und/oder das Verhalten des Objekts zu bestimmen.

## Revendications

1. Matériau de recouvrement d'une surface d'un capteur (100, 200, 300, 400, 500, 600, 700) comprenant une couche de matière synthétique et une couche de capteur (130, 230, 330, 430, 530, 630, 730, 830), la couche de capteur (130, 230, 330, 430, 530, 630, 730, 830) étant configurée pour détecter un changement dans une propriété électrique, qui est la résistance et/ou la capacitance, et la couche de capteur (130, 230, 330, 430, 530, 630, 730, 830) comprenant une couche mixte de propriétés électriques et propriétés mécaniques détectables de capteur **caractérisée en ce que** la couche de capteur (130, 230, 330, 430, 530, 630, 730, 830) comprend trois couches, à savoir une couche supérieure comprenant une couche de capteur aux propriétés mécaniques détectables (130), une couche intermédiaire comprenant une couche isolante (176), et une couche inférieure comprenant une couche de capteur aux propriétés électriques détectables (530).

2. Matériau de recouvrement d'une surface d'un capteur (100, 200, 300, 400, 500, 600, 700) selon la revendication 1, la couche de capteur (130, 230, 330, 430, 530, 630, 730, 830) étant configurée pour détecter tout contact avec un objet conducteur et/ou la proximité d'un objet conducteur; de préférence la couche de capteur (130, 230, 330, 430, 530, 630, 730, 830) comprenant un ou plusieurs éléments conducteurs (137A, 137B, 137C, 137D, 137E, 137F, 138A, 138B, 138C) placés sur une couche de matière synthétique.

3. Matériau de recouvrement d'une surface d'un capteur (100, 200, 300, 400, 500, 600, 700) selon la revendication 1 ou la revendication 2, la couche de capteur (130, 230, 330, 430, 530, 630, 730, 830) comprenant un réseau de capteurs (177, 277) comprenant une pluralité de capteurs (175A, 175B, 175C, 275A, 275B, 275C).

4. Matériau de recouvrement d'une surface d'un capteur (100, 200, 300, 400, 500, 600, 700) selon une quelconque des revendications précédentes, la couche de capteur (130, 230, 330, 430, 530, 630, 730, 830) comprenant une couche de matériau capteur, qui est une couche de capteur aux propriétés mécaniques détectables (130, 230, 330) détectant une variation dans une propriété mécanique, et au moins une couche électro-conductrice (132, 136) ; la couche de capteur comprenant de préférence une couche électro-conductrice supérieure (132) positionnée, en cours d'usage, au-dessus de la couche de matériau capteur, et une couche électro-conductrice inférieure (136) positionnée, en cours d'usage, au-dessous de la couche de matériau capteur.

5. Matériau de recouvrement d'une surface d'un capteur (100, 200, 300, 400, 500, 600, 700) selon la revendication 4, la couche de capteur aux propriétés mécaniques détectables (130, 230, 330) détectant l'application, sur la couche de capteur aux propriétés mécaniques détectable, d'une contrainte mécanique par un objet ; la couche de capteur aux propriétés mécaniques détectables (130, 230, 330) détectant, de préférence, l'application d'une contrainte mécanique par un objet par une vibration du matériau capteur et/ou par une déformation du matériau capteur ; le matériau aux propriétés mécaniques détectables comprenant, de préférence, un polymère électro-actif, un électret, un matériau piézoélectrique, un mélange de nanotube de carbone/polymère, un matériau piézo-résistif et/ou une résistance de détection de force.

6. Matériau de recouvrement d'une surface d'un capteur (100, 200, 300, 400, 500, 600, 700) selon la revendication 5, la couche de capteur aux propriétés mécaniques détectables (130, 230, 330) comprenant un capteur aux propriétés électriques détectables (375, 475) comprenant un ou plusieurs capteurs aux éléments conducteurs et/ou un ou plusieurs capteurs capacitifs.

7. Matériau de recouvrement d'une surface d'un capteur (100, 200, 300, 400, 500, 600, 700) selon une quelconque des revendications précédentes, la couche de capteur aux propriétés mécaniques détectables (130, 230, 330) comprenant un capteur aux propriétés mécaniques détectables (375, 475), et le matériau de recouvrement de surface comprenant une aide à la flexion pour accroître le mouvement du capteur aux propriétés mécaniques détectables (375, 475) ; de préférence l'aide à la flexion étant pratiquée sur la couche de matière synthétique pour empiéter sur le capteur aux propriétés mécaniques détectables ; l'aide à la flexion étant, de préférence, un goujon ou un profilé.

8. Matériau de recouvrement d'une surface d'un capteur (100, 200, 300, 400, 500, 600, 700) selon une quelconque des revendications précédentes, au moins une couche de la couche de capteur comprenant une couche de protection (140, 150).

9. Matériau de recouvrement d'une surface d'un capteur (100, 200, 300, 400, 500, 600, 700) selon une quelconque des revendications précédentes, le matériau de recouvrement de surface étant un matériau de revêtement de parois, un matériau de revêtement pour planchers, ou une thibaude installée sous un matériau de revêtement pour plancher classique.

10. Matériau de recouvrement d'une surface d'un capteur (100, 200, 300, 400, 500, 600, 700) selon la revendication 9, le matériau de revêtement pour plancher ou la thibaude installée sous un matériau de revêtement pour plancher classique comprenant une structure de support.

11. Matériau de recouvrement d'une surface d'un capteur (100, 200, 300, 400, 500, 600, 700) selon une quelconque des revendications précédentes, au moins une couche de la couche de capteur comprenant un matériau imprimable.

12. Matériau de recouvrement d'une surface d'un capteur (100, 200, 300, 400, 500, 600, 700) selon une quelconque des revendications précédentes, comprenant une pluralité de différentes zones, comprenant au moins une zone de capteur, dans laquelle le matériau de recouvrement d'une surface comprend une couche de capteur et une zone de non-détection, où la couche de capteur a été remplacée par une couche d'espacement, la couche d'espacement étant réalisée avec une matière synthétique ; l'épaisseur de la couche d'espacement étant, de préférence, substantiellement égale à celle de la couche de capteur.

13. Matériau de recouvrement d'une surface d'un capteur (100, 200, 300, 400, 500, 600, 700) selon la revendication 12, le matériau de recouvrement d'une surface comprenant une zone de signalisation dans laquelle la couche de capteur a été remplacée par une couche de signalisation, comprenant au moins une couche conductrice.

14. Système de recouvrement d'une surface d'un capteur comprenant un matériau de recouvrement d'une surface, selon une quelconque des revendications précédentes, et un boîtier pour composants électriques (186) pour le traitement d'un signal généré par la couche de capteur ; le boîtier (186) comprenant de préférence un processeur de signaux ; le boîtier comprenant de préférence un système de détection.

15. Système de recouvrement d'une surface d'un capteur selon la revendication 14, comprenant un processeur de signaux programmé pour distinguer différents types de données de signaux de couches de capteur, et étant configuré pour déterminer la proximité ou l'emplacement d'un objet, le type d'objet, et/ou le comportement de l'objet.
